(19) Europäisches Patentamt
European Patent Office
Office européen des brevets

(11) **EP 3 904 867 B1**

(12) **EUROPÄISCHE PATENTSCHRIFT**

(45) Veröffentlichungstag und Bekanntmachung des Hinweises auf die Patenterteilung:
**17.08.2022   Patentblatt 2022/33**

(21) Anmeldenummer: **20172214.7**

(22) Anmeldetag: **29.04.2020**

(51) Internationale Patentklassifikation (IPC):
**G01N 21/88** (2006.01)     **G01N 3/06** (2006.01)
**G01N 3/08** (2006.01)     **G01N 3/28** (2006.01)
**G01B 11/26** (2006.01)     **G01B 11/28** (2006.01)

(52) Gemeinsame Patentklassifikation (CPC):
**G01B 11/26; G01B 11/28; G01N 3/068; G01N 3/08;**
G01N 21/8806; G01N 21/8851; G01N 2203/0017;
G01N 2203/0067; G01N 2203/0252;
G01N 2203/0647; G01N 2203/0682

(54) **VERFAHREN UND VORRICHTUNG ZUR BESTIMMUNG DER BRUCHFLÄCHE EINER PROBE**

METHOD AND DEVICE FOR DETERMINING THE BREAK AREA OF A SAMPLE

PROCÉDÉ ET DISPOSITIF DE DÉTERMINATION DE LA ZONE DE RUPTURE D'UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**03.11.2021   Patentblatt 2021/44**

(73) Patentinhaber: **voestalpine Stahl GmbH**
**4020 Linz (AT)**

(72) Erfinder:
• **Kerschbaum, Martin**
**4030 Linz (AT)**
• **Eßbichl, Ramona**
**4061 Pasching (AT)**

(74) Vertreter: **Jell, Friedrich**
**Bismarckstrasse 9**
**4020 Linz (AT)**

(56) Entgegenhaltungen:
**EP-A1- 2 538 195**          **EP-A1- 3 121 582**
**WO-A1-2015/055795**     **DE-A1- 4 033 588**
**DE-A1-102016 212 486**  **DE-A1-102018 217 225**
**FR-A1- 3 064 747**          **US-A1- 2017 322 129**
**US-A1- 2020 124 510**

• **Nn: "Principles and Procedures of Fractography" In: "Metals Handbook Desk Edition", 1. Januar 1998 (1998-01-01), ASM International, XP055733883, ISBN: 978-1-62708-199-3 Seiten 1238-1247, DOI: 10.31399/asm.hb.mhde2.a0003226, * Seite 1239, Spalte 2, Absatz 3 - Spalte 3, Absatz 3; Abbildungen 1-13 ***

**Beschreibung**

Die Erfindung betrifft ein Verfahren zum Bestimmen der Bruchfläche einer Probe und eine Vorrichtung hierzu.

Zur Beurteilung des Betriebsverhaltens und insbesondere der Betriebsfestigkeit von Materialien ist es bekannt, diese sogenannten zerstörenden Werkstoffprüfungen zu unterziehen. Derartige bekannte zerstörende Werkstoffprüfungen sind beispielsweise Abriebversuche, Druckfestigkeitsversuche mit Stauchzylindern, Biegeversuche und Zugversuche - jeweils bis zum Versagen des Prüfkörpers. Bei Zugversuchen ist hierbei nicht nur die Kraft interessant, die maximal aufgewendet werden muss, um den Zugkörper zu zerreißen, sondern auch die Grenze zwischen elastischer und plastischer Verformung und der Verlauf der plastischen Verformung. Zudem ist der sogenannte Z-Wert von Interesse. Der Z-Wert beschreibt die prozentuale relative Brucheinschnürung des Probenkörpers, bezogen auf den Ausgangsprobenquerschnitt, und damit letztlich auch dessen Fließverhalten bis zum Versagen. Für metallische Werkstoffe sind diese Zugversuche unter anderem in der EN ISO 6892-1 genormt. Der Z-Wert (auch als Brucheinschnürung bekannt) ist bei einer Flachzugprobe bzw. Probe die prozentuale Abnahme des Querschnitts - wobei gilt:

$$Z = \frac{S_0 - S_U}{S_U} * 100$$

Hierbei sind So die Größe der Anfangsquerschnittsfläche der Probe und Su die auf eine zur Längsachse L der Probe normal stehende Ebene projizierte Bruchquerschnittsfläche der Probe.

Der Z-Wert wird derzeit auf unterschiedliche Weisen bestimmt:
Die eine Bestimmungsmethode ist die Betrachtung im Stereomikroskop, wobei diese händisch laut Messvorschrift erfolgt. Hierbei wird wegen des hohen Aufwands keine Bruchflächengröße erfasst, sondern nur die lokale Bruchdicke an bestimmten Positionen (Probenmitte, Probenränder). Hierbei ist problematisch, dass bei der Messung mittels Stereomikroskop eine händische Ermittlung der Daten erfolgt, was fehleranfällig ist.

Eine weitere Methode ist die Forschungsprüfmaschine, bei der eine halb automatische Auswertung mithilfe eines Kamerasystems erfolgt, wobei jedoch eine manuelle Unterstützung bei der Bildauswertung nötig ist, was die Automatisierung des Verfahrens verhindert. Zudem ist eine exakte Auswertung der Bruchfläche hierbei nicht möglich. Bei der automatisierten Erfassung mittels Roboter können Kontrastprobleme zu einer fehlerhaften automatischen Datenermittlung führen, was zu einer fehlerhaften Auswertung führt.

Aus der WO2015/055795 A1 ist es bekannt, die Einschnürung von Metall mittels zweier Kameras zu erfassen, wobei bei Hintergrundbeleuchtung mehrere Bilder durch mindestens zwei Kameras aufgenommen werden.

Aus der DE4033588A1 ist es bekannt, bei der Vermessung von Werkstoffoberflächen durch Beleuchtung der Seitenwand zu einer Erhöhung des Kontrastes beizutragen.

Aus der DE 10 2018 217 225 A1 ist ein Verfahren zur Bestimmung mechanischer und/oder thermischer Eigenschaften an Probenkörpern bekannt. Bei einem Bruch an Probenkörpern wird eine Erfassung und Bewertung der jeweiligen Bruchfläche(n) durchgeführt. Zu den Bruchflächen kann nach dem Bruch mindestens eine Bestimmung und Protokollierung der geometrischen Abmessungen der Bruchstücke, eine Charakterisierung und Protokollierung der Bruchflächen der Bruchstücke sowie deren Ausrichtung zum Trägerelement und eine Kontrolle, ob der Bruch im Bereich der gewünschten Beanspruchung erfolgte, durchgeführt werden.

Es ist daher eine Aufgabe der Erfindung, ein Verfahren zu schaffen, mit der in einfacher, zuverlässiger und exakter Weise einer Bruchfläche, insbesondere deren Bruchflächengröße Su, einer Probe, vorzugsweise automatisiert, bestimmt werden kann. Diese Aufgabe wird anhand eines Verfahrens mit den Merkmalen des Anspruchs 1 gelöst. Vorteilhafte Weiterbildungen sind in den Unteransprüchen gekennzeichnet. Hält ein beweglicher Probenhalter die Probe, wobei ein erstes Kamerasystem mindestens ein Bruchwinkelbild zu einem Bruchwinkel der Bruchfläche der Probe optisch erfasst, können alle Voraussetzungen im Verfahren geschaffen werden, die Bruchfläche der Probe exakt positionieren zu können.

Und zwar, in dem die Bruchfläche der Probe mithilfe des beweglichen Probenhalters in Abhängigkeit des, vom ersten Kamerasystems erfassten Bruchwinkelbilds zu einer optischen Achse eines zweiten Kamerasystems ausgerichtet wird. Vorzugsweise derart, dass die Längsachse der Probe und die optische Achse des zweiten Kamerasystems den Bruchwinkel zueinander einnehmen. Hierzu wird Bruchwinkel aus dem Bruchwinkelbild des erstes Kamerasystems bestimmt, beispielsweise von der Auswerteeinrichtung.

Dies stellt verfahrenstechnisch sicher, dass das zweite Kamerasystem, ein exaktes Bruchflächenbild von der Bruchfläche der Probe erfassen kann. Solch eine Ausrichtung der Bruchfläche zur optischen Achse des zweiten Kamerasystems erlaubt Aufnahmen der Bruchfläche mit ausreichender Tiefenschärfe für die Ermittlung der Bruchflächengeometrie. Auch eine optimale Positionierung der Kamera und eine optimale Tiefenschärfe werden hierdurch erleichtert.

Beleuchtet nachfolgend mindestens eine erste Beleuchtungseinrichtung die Probe, wobei die erste Beleuchtungseinrichtung zur Dunkelfeldbeleuchtung der Bruchfläche vorgesehen ist, kann damit bei der Bilderfassung eine Dunkelfeldbeleuchtung durchgeführt werden, bei der nur jene Bereiche beleuchtet werden, welche nicht gemessen werden sollen bzw. nicht in SU eingehen. Hierdurch kommt es zu einer Kontrasterhöhung, welche eine robuste Methode zur Ermittlung der Bruchflächengröße sicherstellt. Als beispielhaft geeignet kann sich hierbei ein Ringlicht herausstellen, welches die Probe entfernt von der Bruchfläche rundum auf die Seitenflächen beleuchtet. Damit sind alle Voraussetzungen geschaffen, um in zuverlässiger Weise die Größe und andere Parameter der Bruchfläche exakt bestimmen zu können. Dies in dem das zweite Kamerasystem mindestens ein Bruchflächeneinzelbild von der Bruchfläche der Probe unter Dunkelfeldbeleuchtung optisch erfasst und nachfolgend eine Auswerteeinrichtung in Abhängigkeit wenigstens des, mindestens einen Dunkelfeld-Bruchflächeneinzelbild ein, vorzugsweise digitales, Bruchflächenbild erzeugt und anhand dieses Bruchflächenbilds die Bruchfläche bestimmt. Beispielsweise kann so zuverlässig von dieser Bruchfläche dessen Bruchflächengröße SU und/oder dessen Außenkontur K und/oder Topologie etc. bestimmt werden.

Bei der Bestimmung der Bruchflächengröße SU kann es unter anderem auch mit Kenntnis des Bruchwinkels möglich werden, den Z-Wert (Brucheinschnürung) bei Kenntnis der Größe des Anfangsquerschnitts der Probe zu berechnen, was für einen vergleichsweise hohen Automatisationsgrad bei der Bestimmung von Werkstoffkenngrößen genützt werden kann. Insbesondere mit einer vorzugsweise digitalisierten Bruchflächenkontur kann die Bestimmung weiterer Kennwerte ermöglicht werden. Beispielsweise kann die Dickeneinschnürung oder Breiteneinschnürung aus der Außenkontur der Bruchfläche abgeleitet werden. Dickeneinschnürung bzw. Breiteneinschnürung entsprechen der prozentuellen Abnahme der Dicke bzw. Breite in Anlehnung an die Definition der Brucheinschnürung. Auch die Ermittlung anderer Kennwerte, welche beispielsweise die lokale Umformbarkeit beschreibt ist denkbar.

Der Kontrast des Bruchflächenbilds und damit die Genauigkeit des Verfahrens bei der Bestimmung der Bruchflächengröße Su kann weiter erhöht werden, indem mehrere Dunkelfeld-Bruchflächeneinzelbilder unter unterschiedlichen Beleuchtungswinkeln (β) der mindestens einen ersten Beleuchtungseinrichtung zur Probe vom zweiten Kamerasystem optisch erfasst werden und von der Auswerteeinrichtung zu einem einzigen Dunkelfeld-Bruchflächeneinzelbild arithmetisch, insbesondere additiv, verknüpft werden. Insbesondere für die automatisierte Bruchflächenbestimmung kann dies von Vorteil sein, da der optimale Beleuchtungswinkel vom Verlauf der Einschnürung des Bruches abhängig ist. Werden mehrere Aufnahmen erstellt und arithmetisch verknüpft, ist auch bei einer weitgehend automatisierten Bruchflächenbestimmung ein Dunkelfeld-Bruchflächeneinzelbild mit gut ausgeleuchteter Einschnürung, die ja die Begrenzung der Bruchfläche ausbildet, zur Weiterverarbeitung vorhanden.

Werden die Dunkelfeld-Bruchflächeneinzelbilder in Abhängigkeit deren Beleuchtungswinkeln gewichtet arithmetisch verknüpft, kann dies den Kontrast am Bruchflächenbild weiter verbessern. Diese Gewichtung kann abhängig von Probenart und/oder Probenquerschnitt vorgegeben werden, da ähnliche Proben meist einen ähnlichen Bruchverlauf und damit ähnliche Einschnürungen aufweisen.

Werden mindestens ein Bruchflächeneinzelbild unter Auflichtbeleuchtung optisch vom zweiten Kamerasystem und/oder mindestens ein Bruchflächeneinzelbild unter, insbesondere kollimierter, Hintergrundbeleuchtung optisch vom zweiten Kamerasystem erfasst, kann der Bildverarbeitung ein weiteres Bruchflächeneinzelbild bzw. weitere Bruchflächeneinzelbilder zur Verfügung stehen, um damit das Bruchflächenbild zu verbessern.

Die Bildverarbeitung der Auswerteeinrichtung kann weiter vereinfacht werden, wenn, von der Auswerteeinrichtung das, mindestens eine Dunkelfeld-Bruchflächeneinzelbild und das mindestens eine Hintergrund-Bruchflächeneinzelbild und/oder das mindestens eine Auflicht-Bruchflächeneinzelbild arithmetisch zum Bruchflächenbild verknüpft werden.

Hohe Kontrastverhältnisse am Bruchflächenbild können erreicht werden, wenn das Dunkelfeld-Bruchflächeneinzelbild und das mindestens eine Hintergrund-Bruchflächeneinzelbild additiv und gegebenenfalls das mindestens eine Hellfeld-Bruchflächeneinzelbild subtraktiv zum Bruchflächenbild verknüpft werden

Vorzugsweise wird das Bruchflächenbild einer Schwellwertoperation unterzogen, was die automatisierte Erkennung des Umrisses des Bruchflächenbilds vereinfachen kann.

Vorzugsweise wird aus dem Bruchwinkelbild der Bruchwinkel mithilfe einer Regressionsgeraden entlang der Bruchkante oder einem kleinsten umschreibenden Rechteck um die Bruchkante ermittelt, was eine besonders gute Näherung des Bruchwinkels darstellen kann.

Es ist zudem Aufgabe der Erfindung, eine Vorrichtung zu schaffen, mit der in einfacher, zuverlässiger und exakter Weise die Bruchflächengeometrie, vorzugsweise automatisiert, bestimmt werden kann.

Die Aufgabe wird mit den Merkmalen des Anspruches 9 gelöst. Vorteilhafte Weiterbildungen sind in den hiervon abhängigen Unteransprüchen gekennzeichnet. Indem das erste Kamerasystem zur optischen Erfassung mindestens eines Bruchwinkelbilds zu einem Bruchwinkel der Bruchfläche der Probe vorgesehen ist, können alle Voraussetzungen geschaffen werden, die Bruchfläche der Probe genau gegenüber dem zweiten Kamerasystem auszurichten.

Der bewegliche Probenhalter ist nämlich derart beweglich an der Vorrichtung gelagert, dass die Bruchfläche der Probe in Abhängigkeit des, vom ersten Kamerasystems erfassten Bruchwinkelbilds zu der optischen Achse des zweiten Kamerasystems ausgerichtet werden kann. Vorzugsweise derart, dass die Längsachse der Probe und die optische Achse des zweiten Kamerasystems den Bruchwinkel zueinander einnehmen.

Damit kann sichergestellt werden, dass das zweite Kamerasystem, das zur optischen Erfassung mindesten eines Bruchflächeneinzelbilds von der Bruchfläche der Probe ausgebildet ist, ein exaktes Bruchflächenbild von der Bruchfläche der Probe erfassen kann. Diese Ausrichtung der Bruchfläche zur optischen Achse des zweiten Kamerasystems erlaubt auch bei geringer Schärfentiefe des zweiten Kamerasystems Aufnahmen der Bruchfläche mit ausreichender Schärfe für die Ermittlung der Bruchflächengeometrie. Auch eine optimale Positionierung der Kamera und eine optimale Schärfe werden hierdurch erleichtert.

Des Weiteren ist eine erste Beleuchtungseinrichtung zur Dunkelfeldbeleuchtung der Bruchfläche vorgesehen. Erfindungsgemäß wird damit bei der Bilderfassung eine Dunkelfeldbeleuchtung durchgeführt, bei der nur jene Bereiche beleuchtet werden, welche nicht zur Bruchfläche gehören bzw. nicht in Su eingehen. Hierdurch kommt es zu einer Kontrasterhöhung, welche eine robuste Methode zur Ermittlung der Bruchflächengröße sicherstellt. Als beispielhaft geeignet kann sich hierbei ein Ringlicht herausstellen, welches die Probe entfernt von der Bruchfläche rundum auf die Seitenflächen beleuchtet.

Damit sind alle Voraussetzungen geschaffen, um in zuverlässiger Weise die Größe der Bruchfläche exakt bestimmen zu können. Dies, indem die Auswerteeinrichtung ausgebildet ist, in Abhängigkeit wenigstens des mindesten einen Dunkelfeld-Bruchflächeneinzelbilds des zweiten Kamerasystems ein Bruchflächenbild zu erzeugen und anhand dieses Bruchflächenbilds die Bruchflächengröße Su der Bruchfläche zu bestimmen.

Dadurch und mit Kenntnis des Bruchwinkels wird es auch möglich, den Z-Wert (Brucheinschnürung) bei Kenntnis der Größe des Anfangsquerschnitts der Probe zu bestimmen, was für einen vergleichsweise hohen Automatisationsgrad bei der Bestimmung von Werkstoffkenngrößen genützt werden kann.

Die Konstruktion der Vorrichtung kann weiter vereinfacht werden, indem die Vorrichtung eine Bogenführung aufweist, über die der Probenhalter an der Vorrichtung beweglich gelagert ist. Solch eine Bogenführung kann außerdem auch für eine exakte Ausrichtung der Bruchfläche der Probe gegenüber der optischen Achse des zweiten Kamerasystems sorgen - was die Genauigkeit in der Bestimmung der Bruchflächengröße weiter erhöhen kann. Vorzugsweise ist die Bogenführung ausgebildet, den Probenhalter um das Messzentrum herum, auf das Messzentrum zu und/oder von diesem Messzentrum wegbewegbar zu lagern, was eine vergleichsweise hohe Beweglichkeit ermöglichen kann. Dies kann beispielsweise genützt werden, die Bruchfläche besonders exakt auszurichten, was die Genauigkeit der Vorrichtung zur Bestimmung der Bruchflächengröße weiter erhöhen kann. Vorzugsweise ist der Probenhalter ausgebildet, die Probe elektromagnetisch zu halten, was eine zuverlässige Einspannung der Probe am Probenhalter sicherstellen kann.

Der Kontrast kann weiter erhöht werden, wenn mehrere erste Beleuchtungseinrichtungen zur Dunkelfeldbeleuchtung der Bruchfläche vorgesehen sind, wobei die Beleuchtungseinrichtungen untereinander verschiedene Beleuchtungswinkel aufweisen und die Vorrichtung ausgebildet ist, die ersten Beleuchtungseinrichtungen alternierend einzuschalten. Werden die ersten Beleuchtungseinrichtungen alternierend eingeschaltet, können die unterschiedlichen ersten Beleuchtungseinrichtungen die jeweiligen dunkelfeldbeleuchteten Bruchflächenbilder der anderen Beleuchtungseinrichtungen nicht durch Schattenbildung oder dergleichen beeinflussen. Eventuelle Kontrastprobleme bei der Bildverarbeitung durch die Auswerteeinrichtung, wie sie bei einer Ringfeldbeleuchtung oder mehreren gleichzeitig eingeschalteten ersten Beleuchtungseinrichtungen auftreten können, sind somit vermeidbar.

Ist die Auswerteeinrichtung ausgebildet, in Abhängigkeit mehrerer, insbesondere größer gleich vier, Dunkelfeld-Bruchflächeneinzelbilder, unter verschiedenen Beleuchtungswinkeln ein einziges Bruchflächenbild zu erzeugen, kann die Vorrichtung weiter verbessert werden. Dies beispielsweise, indem diese Dunkelfeld-Bruchflächeneinzelbilder bekannten Verfahren zur Verbesserung des Kontrast- und/oder Dynamikumfangs zugeführt werden, beispielsweise um die Begrenzung der Bruchfläche sichtbarer hervorzuheben. Anhand dieses Optimierungsverfahrens kann in weiterer Folge die Bruchflächengröße noch exakter bestimmt werden, was die Zuverlässigkeit der Vorrichtung weiter erhöhen kann.

Vorzugsweise ist die erste Beleuchtungseinrichtung ausgebildet, die rechte Schmalseitenfläche der Probe, die linke Schmalseitenfläche der Probe, die obere Breitseitenfläche der Probe und/oder die untere Breitseitenfläche der Probe zu beleuchten, um durch unterschiedliche Beleuchtungsszenarien ein Kontrastoptimum zu erreichen.

Vorzugsweise ist eine erste Beleuchtungseinrichtung um das Messzentrum herum drehbar angeordnet, was die Möglichkeit eröffnet, aufgrund der Vielzahl an einnehmbaren Lagen auch dementsprechend eine hohe Anzahl an Bruchflächeneinzelbildern unter Dunkelfeldbeleuchtung aufzunehmen. Dies kann die optische Auflösung der Bruchfläche weiter erhöhen, wodurch die Bruchflächengröße noch exakter bestimmbar werden kann.

Vorzugsweise ist eine zweite Beleuchtungseinrichtung zur Auflichtbeleuchtung der Bruchfläche vorgesehen. Der Kontrast zwischen Bruchfläche und Seitenfläche kann so erhöht werden.

Vorzugsweise ist eine dritte Beleuchtungseinrichtung zur Hintergrundbeleuchtung der Bruchfläche vorgesehen. Dies kann die Ausleuchtung von Bruchflächenkanten verbessern, bei denen die Dunkelfeldbeleuchtung mittels der ersten Beleuchtungseinrichtung keine eindeutigen Ergebnisse liefert. Insbesondere an der Schmalseite, bei welcher die Bruchfläche zur Schmalseitenfläche einen spitzen Winkel aufweist, kann die dunkelfeldbeleuchtete Schmalseite aus Sicht der Kamera von der Bruchfläche verdeckt werden, was eine eindeutige Erkennung des Bruchflächenumrisses verhindern kann. Die Hintergrundbeleuchtung kann hingegen an dieser Schmalseite für bessere Kontrastverhältnisse sorgen.

Die Konstruktion der Vorrichtung kann weiter vereinfacht werden, wenn die drehbar ausgebildete, erste Beleuchtungseinrichtung in einer Drehstellung die zweite Beleuchtungseinrichtung ausbildet.

Die Bildverarbeitung kann konstruktiv einfach gelöst werden, wenn die Auswerteeinheit ausgebildet ist, Dunkelfeld-Bruchflächeneinzelbild des zweiten Kamerasystems und das mindestens eine Hintergrund-Bruchflächeneinzelbild des zweiten Kamerasystems und gegebenfalls das mindestens eine Auflicht-Bruchflächeneinzelbild des zweiten Kamerasystems zu einem Bruchflächenbild arithmetisch zu verknüpfen.

Weist das zweite Kamerasystem ein telezentrisches Objektiv auf, kann die Auswertung der Bruchflächengröße vereinfacht werden. So erlaubt das telezentrische Objektiv Aufnahmen ohne perspektivische Verzerrung, wodurch eine einheitliche Umrechnung von Pixel auf Längenmaße über die gesamte Bruchfläche möglich ist. Aufwendige Berechnungen um die perspektivische Verzerrung zu kompensieren können vermieden werden.

Des Weiteren ist im Allgemeinen vorstellbar, dass die Vorrichtung (zumindest erstes und zweites Kamerasystem sowie die Probe) schwingungsgedämpft gelagert ist. Dann können mehrere aufeinanderfolgende Aufnahmen überlagert werden, wobei sichergestellt ist, dass diese aufgrund von Schwingungen oder Vibrationen zueinander nicht versetzt sind. Ist zudem die Position des ersten Kamerasystems zur Position des zweiten Kamerasystems kalibriert, können die Bilddaten miteinander kombiniert werden, was die Bestimmung der Bruchflächengeometrie vereinfachen kann. Beispielsweise kann in der Ansicht des ersten Kamerasystems (Bruchwinkelkamera) oftmals die äußere seitliche Begrenzung der Bruchfläche einfach bestimmt werden.

Die Erfindung wird beispielsweise anhand von Figuren näher erläutert. Es zeigen dabei:

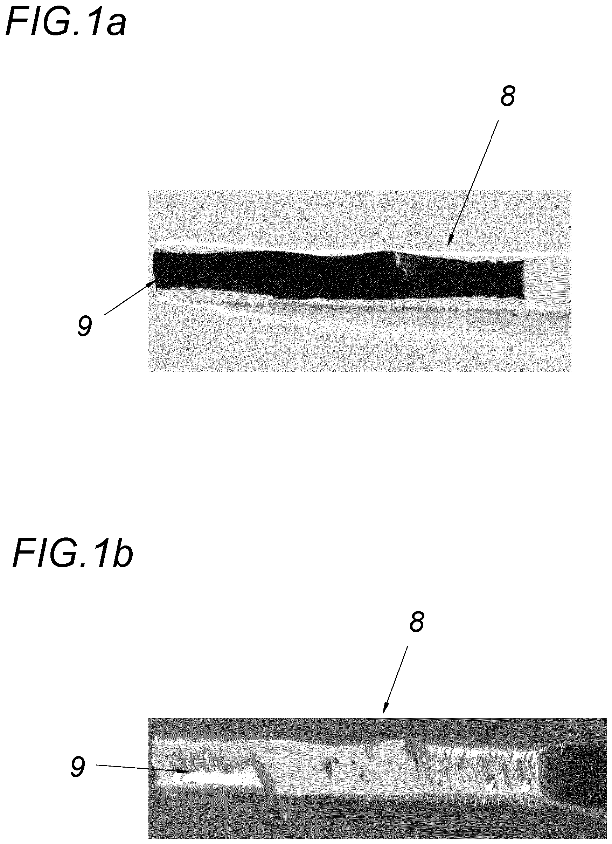

Figur 1a      eine Draufsicht auf eine Bruchfläche einer dunkelfeldbeleuchteten Probe;

Figur 1        b eine Draufsicht auf eine Bruchfläche der Probe nach Fig. 1a unter Hellfeldbeleuchtung;

Figur 2:      eine Seitenansicht von vorne auf eine Messanordnung;

Figur 3:      eine Draufsicht auf die Vorrichtung nach Fig. 2;

Figur 4:      eine Aufsicht auf die Probe, aufgenommen mit dem ersten Kamerasystem der Vorrichtung nach Fig. 2;

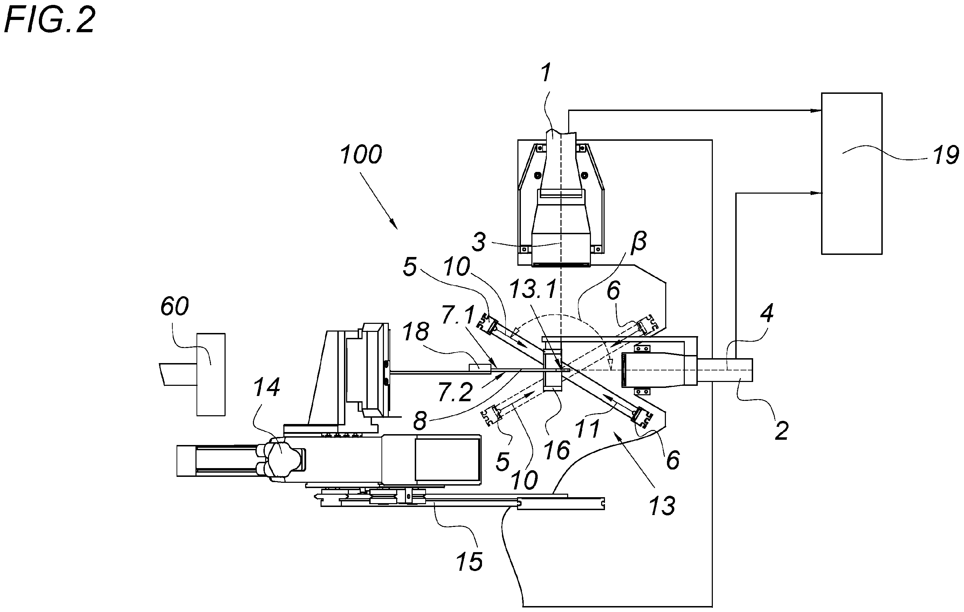

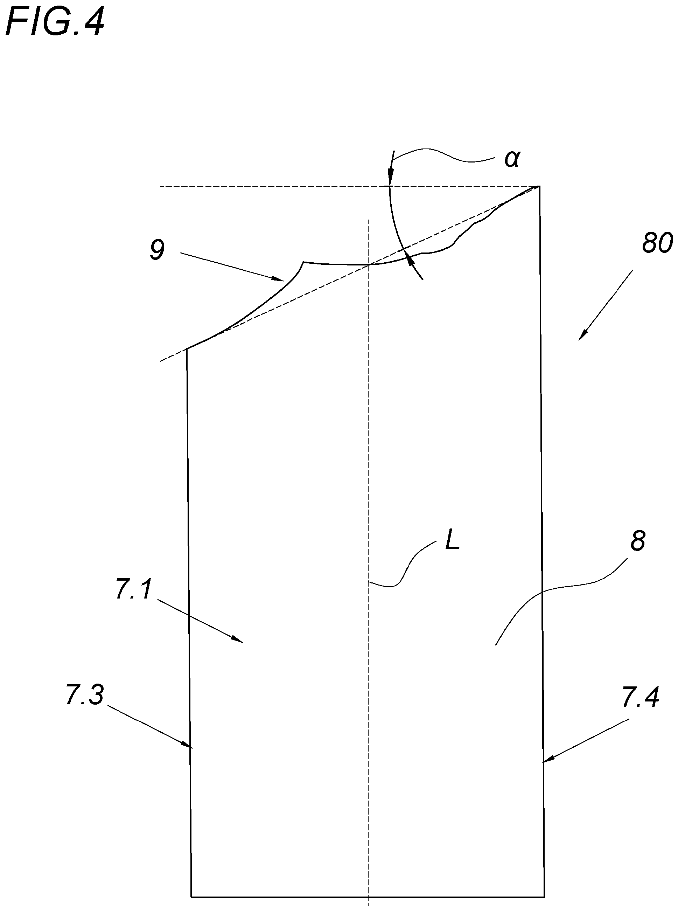

Figur 4 bis 8:  dunkelfeld-beleuchtete Bruchflächeneinzelbilder, aufgenommen mit dem zweiten Kamerasystem der Vorrichtung nach Fig. 2;

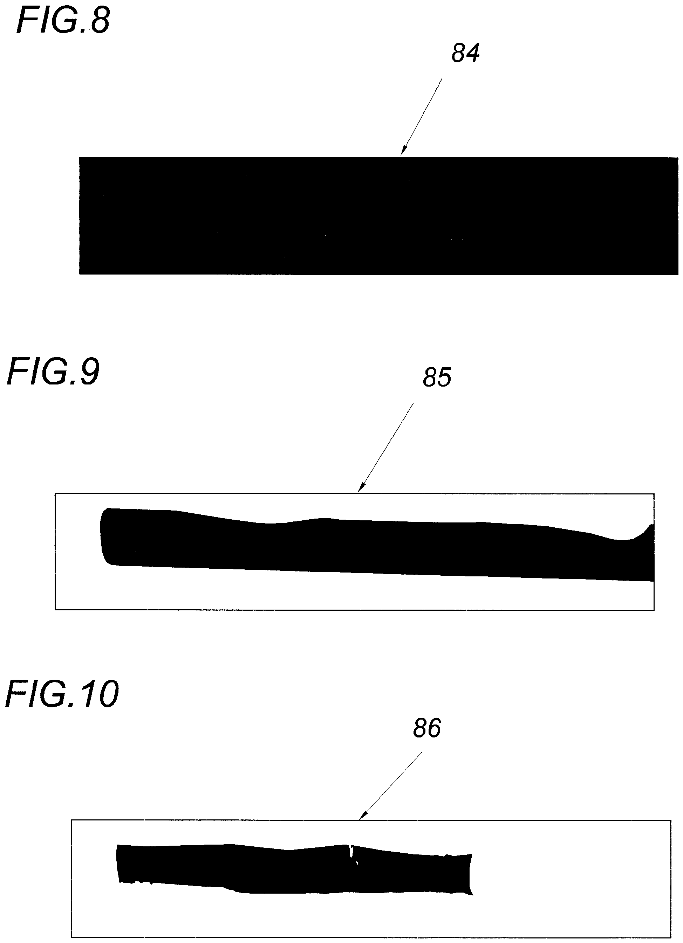

Figur 9:      ein hintergrund-beleuchtetes Bruchflächenbild, aufgenommen mit dem zweiten Kamerasystem der Vorrichtung nach Fig. 2;

Figur 10:     ein zusammengesetztes Bruchflächenbild aus den Aufnahmen nach Fig. 4 bis 9;

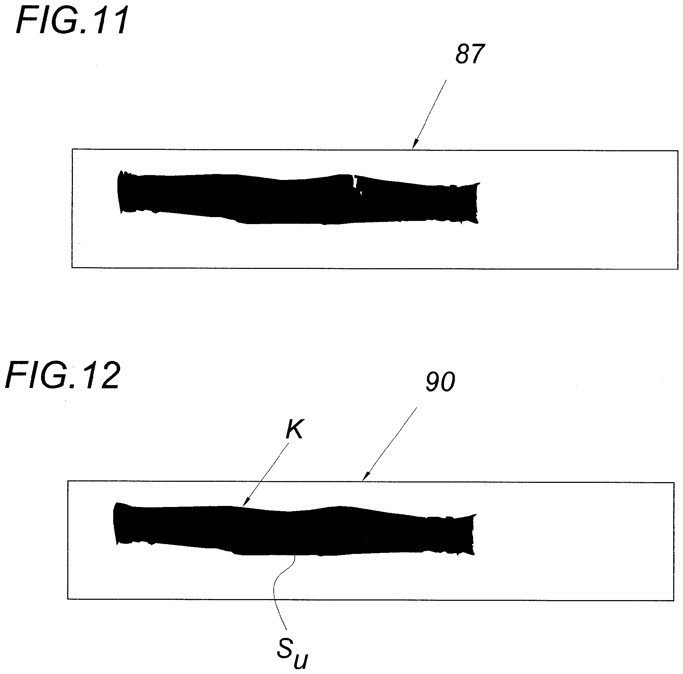

Figur 11:     eine binarisierte Version des Bruchflächenbilds aus Fig 10, und

Figur 12:     ein finales Bruchflächenbild nach der Bildbearbeitung und Auswertung der Vorrichtung nach Fig. 2.

Für eine einwandfreie Erfassung einer Bruchfläche 9 an einer Probe 8 zur Beurteilung der Bruchfläche 9 und damit bestimmter Materialeigenschaften, wie beispielsweise dem Z-Wert, ist es notwendig, dass die Bruchfläche 9 mit einem möglichst starken Kontrast und entsprechend scharfen Umrandungen darstellbar ist. Beispielsweise wird der Z-Wert entsprechend der eingangs beschrieben Formel ermittelt. Hierbei sind So der Anfangsquerschnitt der Probe 8, nämlich hier einer Flachzugprobe, und Su die auf eine zur Längsachse der Probe normal stehende Ebene projizierte Bruchquerschnittsfläche der Bruchfläche 9.

Beispielsweise erkennt man in Figur 1a an der dunkelfeldbeleuchteten Bruchfläche 9 der Probe 8 eine vergleichsweise stark kontrastierte Bruchfläche 9, während in Figur 1b an der hellfeldbeleuchteten Bruchfläche 9 der Probe 8 die Bruchfläche 9 vergleichsweise schlecht erfassbar ist. Dies beispielsweise durch Spiegelungen an Einschnürungsflächen unter Hellfeldbeleuchtung, welche Einschnürungsflächen nicht Teil der Bruchfläche 9 sind. Zudem werden aufgrund von Unebenheiten des Bruches bzw. an der Bruchfläche 9 unterschiedliche schwarz/weiß-Helligkeitswerte erzielt, welche für eine exakte Erfassung der Bruchfläche 9 suboptimal sind.

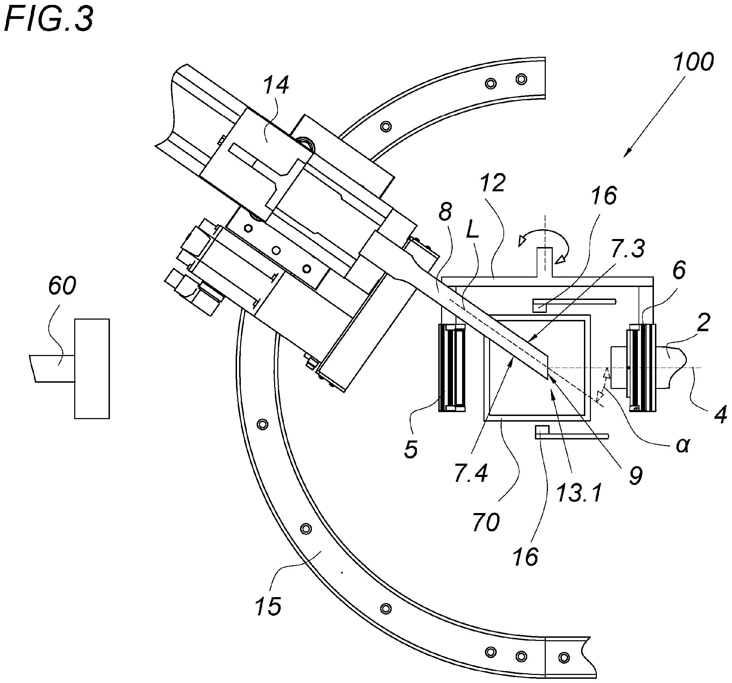

In den Figuren 2 und 3 ist die erfindungsgemäße Vorrichtung 100 dargestellt. Gemäß Figur 2 weist die Vorrichtung 100 zwei Kamerasysteme 1, 2 auf, die Teile einer Messeinrichtung 13 der Vorrichtung 100 sind. Ein erstes Kamerasystem 1 ist oberhalb des Erkennungsbereichs der Bruchfläche 9 der Probe 8 angeordnet und dient als Bruchwinkelkamerasystem. Ein zweites Kamerasystem 2 ist als Bruchflächenkamerasystem ausgebildet und dient zur optischen Erfassung mindesten eines Bruchflächeneinzelbilds von der Bruchfläche 9 der Probe 8.

Die optische Achse 3 des ersten Kamerasystems 1 steht senkrecht auf eine obere Breitfläche 7.1 des Probenkörpers der Probe 8. Die optische Achse 4 des zweiten Kamerasystems 2 verläuft parallel zur oberen bzw. unteren Breitfläche 7.1, 7.2 der Probe 8 und ist auf die Bruchfläche 9 der Probe 8 gerichtet.

Die optischen Achsen 3, 4 der zwei, senkrecht zueinanderstehenden Kamerasysteme 1, 2 kreuzen sich im Messzentrum 13.1 der Messeinrichtung 13.

Vom zweiten Kamerasystem 2 aus gesehen, ist eine erste Beleuchtungseinrichtung 5 hinter der Bruchfläche 9 angeordnet, und zwar derart, dass deren optischen Beleuchtungsachse 10 auf das Messzentrum 13.1 zeigt und hinter der Bruchfläche 9 auf die Breitseitenfläche 7.2 des Körpers der Probe 8 auftrifft. Damit ist diese erste Beleuchtungseinrichtungen 5 zur Dunkelfeldbeleuchtung der Bruchfläche 9 ausgebildet.

Die erste Beleuchtungseinrichtung 5 ist an einem um das Messzentrum 13.1 schwenkbaren Balken 12 endseitig vorgesehen. Am anderen Ende des Balkens 12 ist eine zweite Beleuchtungseinrichtung 6 angeordnet. Damit ist die zweite Beleuchtungseinrichtung 6 vom zweiten Kamerasystem 2 aus gesehen vor der Bruchfläche. Der Abstand zwischen den beiden Beleuchtungseinrichtungen 5, 6 ist beispielhaft 115 mm (Millimeter). Aufgrund der möglichen Drehung um die Bruchfläche kann die zweite Beleuchtungseinrichtung 6 in einer, in Fig. 2 strichliert eingezeichneten Drehstellung des Balkens 12.1 auch als erste Beleuchtungseinrichtung 5 zur Beleuchtung der oberen Breitseitenfläche 7.1 verwendet werden, was eine Dunkelfeldbeleuchtung der Bruchfläche 9 bewirkt.

Da die zweite Beleuchtungseinrichtung 6 vom zweiten Kamerasystems 2 aus gesehen vor der Bruchfläche angeordnet ist, kann die zweite Beleuchtungseinrichtung 6 zur Auflichtbeleuchtung der Bruchfläche 9 eingesetzt werden. In gleicher Weise kann auch die erste Beleuchtungseinrichtung 5 in der strichliert eingezeichneten Drehstellung des Balkens 12.1 als zweite Beleuchtungseinrichtung zur Auflichtbeleuchtung der Bruchfläche 9 eingesetzt werden.

Der optimale Beleuchtungswinkel $\beta$ der Beleuchtungsachsen 10, 11 der ersten und zweiten Beleuchtungseinrichtungen 5, 6 zur Längsachse L der Probe 8 wird abhängig vom Verlauf der Einschnürung des Bruches und damit abhängig von Probendicke und Probenmaterial der Probe 8 eingestellt. Der, um die Bruchfläche 9 der Probe 8 in einer Kreisbahn drehbare Balken 12 erlaubt die Beleuchtungsachsen 10, 11 der ersten und zweiten Beleuchtungseinrichtungen 5, 6 in einem Beleuchtungswinkel $\beta$ von 160 bis 20 Grad, bevorzugt 150 - 30 Grad, zu variieren.

Die ersten und zweiten Beleuchtungseinrichtungen 5, 6 sind als LED-Balken ausgebildet.

Weiters ist eine zusätzliche erste Beleuchtungseinrichtung 16 auf Fig. 2 bzw. 3 erkennbar, die zur Dunkelfeldbeleuchtung der Schmalseitenflächen 7.3, 7.4 der Probe vorgesehen ist.

Vorstellbar ist auch eine andere, nicht gezeigte Ausführungsvariante, wobei die erste Beleuchtungseinrichtung von einem LED-Ring ausgebildet wird.

Durch die unterschiedlichen Lagen der Beleuchtungseinrichtungen 5 und 16 zur Dunkelfeldbeleuchtung ist es möglich, die Probe 8 unter verschiedene Beleuchtungseinrichtungen zu beleuchten. Beispielsweise die rechte Schmalseitenfläche 7.3 der Probe 8, die linke Schmalseitenfläche 7.4 der Probe 8, die obere Breitseitenfläche 7.1 der Probe 8 und für die untere Breitseitenfläche 7.2 der Probe 8.

Des Weiteren ist eine dritte Beleuchtungseinrichtung 60 zur Hintergrundbeleuchtung der Bruchfläche 9 vorgesehen.

Die Vorrichtung 100 weist zudem eine vierte Beleuchtungseinrichtung 70 auf. Diese vorzugsweise innerhalb der Bogenführung 15 vorgesehene Beleuchtungseinrichtung 70 ist quadratisch ausgebildet und dient der Vermessung des Bruchwinkels $\alpha$ mithilfe des ersten Kamerasystems 1. Der Bruchwinkel $\alpha$ wird mit der Auswerteinrichtung 19 aus dem Bruchflächenbild 80 bestimmt werden.

Alle Beleuchtungseinrichtungen 5, 6, 16 bzw. 60, 70 können unabhängig voneinander ein- und ausgeschaltet werden bzw. ist die Vorrichtung 100 diesbezüglich ausgebildet.

Das erfindungsgemäße Verfahren sieht vor, eine Probe 8 auf den Probenhalter 18 vorzugsweise robotisch aufzulegen, wobei die Probe 8 auf dem Probenhalter 18 mithilfe eines Parallelgreifers fixiert wird. Genauso ist aber auch eine elektromagnetische Fixierung für ferromagnetische Proben 8 vorstellbar.

Die entsprechende Probe 8 ist in einem Laufwagen 14 gehalten, in dem die Probe 8 entlang einer Bogenführung 15 um ein Messzentrum 13.1 bewegt werden kann - wie dies in Fig. 3 zu erkennen ist. Die Probe 8 kann hierbei radial auf das Messzentrum 13.1 zu und/oder vom Messzentrum 13.1 wegbewegt werden.

Sodann wird die Probe 8 motorisch in den Bereich des vertikal ausgerichteten ersten Kamerasystems 1 geschoben - bis zu einer von der Kamera erfassten Sollposition. Über das erste Kamerasystem 1 wird dann in Aufsicht auf die Probe 8 der Verlauf der Bruchfläche 9 erfasst und daraus mithilfe der Auswerteeinrichtung 19 der Bruchwinkel $\alpha$ ermittelt. Ein Bruchwinkelbild 80 nämlich eine Aufsicht der Probe mit zugehörigem Bruchwinkel $\alpha$ ist in Figur 4 dargestellt. Der Bruchwinkel $\alpha$ kann dabei mithilfe des kleinstmöglich umschreibenden Rechtecks der Bruchkante oder einer Regressionsgeraden ermittelt werden. Anschließend wird die Probe 8 entlang der Bogenführung 15 um das Messzentrum 13.1 derart herumgeführt, um damit die Bruchfläche 9 zur horizontalen Kameraachse bzw. optischen Achse 4 des zweiten Kamerasystems 2 auszurichten. Der dazu benötigte Rotationswinkel wird von der Auswerteeinrichtung 19 vorgegeben. Verläuft die Längsachse L der Probe 8 vor der Aufnahme parallel zur optischen Achse 4 des zweiten Kamerasystems 2, entspricht der Rotationswinkel dem Bruchwinkel a. Hierbei wird die Probe 8 lediglich nach der Bemessung des Bruchwinkels $\alpha$ in die richtige Position radial verfahren. Damit nehmen die Längsachse L der Probe 8 und die optische Achse 4 des zweiten Kamerasystems 2 den Bruchwinkel $\alpha$ zueinander ein. Damit ist (unter Zuhilfenahme des Bruchwinkels a) eine fiktive Bruchflächenebene der Bruchfläche 9 normal zum zweiten Kamerasystem bzw. dessen optischen Achse 4 ausgerichtet.

Nach dieser Ausrichtung in Abhängigkeit des Bruchwinkels α wird die Probe 8 auf das Messzentrum 13.1 zu-oder wegbewegt, um die Bruchfläche 9 in den Bereich optimaler Schärfentiefe des zweiten Kamerasystems 2 zu positionieren.

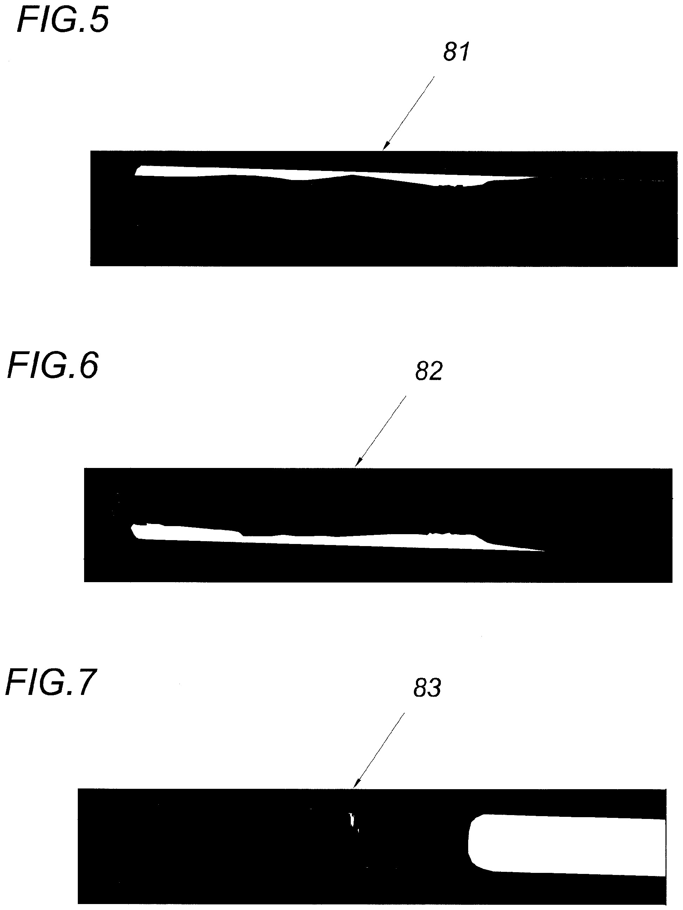

Wenn die entsprechende Positionierung der Probe 8 erfolgt ist und damit die Bruchfläche 9 im Messzentrum 13.1 positioniert ist, werden die Beleuchtungseinrichtungen 5, 16 alternierend eingeschaltet und Bruchflächeneinzelbinder vom zweiten Kamerasystem 2 unter Dunkelfeldbeleuchtung erstellt. Beispielsweise kann eine Aufnahme unter dem Winkel β von 110° von oben und unten für eine Beurteilung der Bruchfläche 9 ausreichend sein. Üblicherweise wird mindestens

a. ein Dunkelfeld-Bruchflächeneinzelbild 81, Fig. 5, unter Dunkelfeldbeleuchtung der ersten Beleuchtungseinrichtung 5 von oben,
b. ein Dunkelfeld-Bruchflächeneinzelbild 82, Fig. 6, unter Dunkelfeldbeleuchtung der ersten Beleuchtungseinrichtung 5 von unten, wobei diese Position der Beleuchtungseinrichtung 5 in Fig. 2 strichliert eingezeichnet ist, welche Beleuchtungseinrichtung 5 sich durch die Drehung der Beleuchtungseinrichtung 6 im Uhrzeigersinn ergibt,
c. ein Dunkelfeld-Bruchflächeneinzelbild 83, Fig. 7, unter Dunkelfeldbeleuchtung der ersten Beleuchtungseinrichtung 16 von rechts,
d. ein Dunkelfeld-Bruchflächeneinzelbild 84, Fig. 8, unter Dunkelfeldbeleuchtung der ersten Beleuchtungseinrichtung 16 von links und
e. ein Hintergrund-Bruchflächeneinzelbild 85, Fig. 9, unter Hintergrundbeleuchtung der dritten Beleuchtungseinrichtung 60 aufgenommen.

Dabei ist in Fig. 8 wenig zu erkennen, da sich die beleuchtete linke Schmalseitenfläche aufgrund des Bruchwinkels α im Schatten bzw. hinter der Bruchfläche der Probe befindet. Diese fehlende Information kann aber aus dem Bruchflächeneinzelbild 85 unter Hintergrundbeleuchtung entnommen werden. Die Bruchflächeneinzelbilder 81, 82, 83, 84 und 85 werden der Auswerteeinrichtung 19 zur Weiterbearbeitung zugeführt.

Jedoch kann zur Verbesserung der Robustheit und für eine verbesserte Qualität optional eine Einzel-Bildaufnahmeserie mit inkrementeller Winkelverstellung des Beleuchtungswinkel β von beispielsweise 10°-Schritten oder 5°-Schritten der Beleuchtungseinrichtungen 5, 6 durchgeführt werden, sodass dann beispielsweise bei einem Beleuchtungswinkel β von 130, 120, 110, 100, 90, 80 und 70 Grad jeweils eine Bildaufnahme der Bruchfläche 9 mit Beleuchtung alternierend von unten und oben vorgenommen wird.

Der vorteilhafte Beleuchtungswinkel β der optischen Beleuchtungsachsen 10 zur Probe ist vom Verlauf der Einschnürung der Bruchfläche abhängig. Um ein möglichst kontrastreiches Dunkelfeldbild der Bruchfläche 9 zu erhalten, werden die Beleuchtungseinrichtungen 5, 6 beispielsweise von einem Beleuchtungswinkel β von 130 Grad bis 50 Grad je 10 Grad gedreht, sodass insgesamt je neun Dunkelfeld-Bruchflächeneinzelbilder unter Dunkelfeldbeleuchtung der ersten Beleuchtungseinrichtung 5 von oben und ersten Beleuchtungseinrichtung 5 von unten vom zweiten Kamerasystem 2 aufgenommen werden. Diese neun Dunkelfeld-Bruchflächeneinzelbilder werden von der Auswerteeinheit 19 gewichtet zu einem einzigen Dunkelfeld-Bruchflächeneinzelbild 81 bzw. 82 arithmetisch kombiniert. Einzelbilder mit Auflichtbeleuchtung, d.h. mit einem Beleuchtungswinkel β kleiner 90 Grad werden mit umgekehrten Vorzeichen, also beispielsweise subtraktiv, kombiniert. Vorteilhaft werden bei bekannter Probengeometrie und der damit zu erwartenden bekannten Einschnürungen der Bruchfläche 9 die neun Dunkelfeld-Bruchflächeneinzelbilder zudem winkelabhängig gewichtet, wodurch sichergestellt werden kann, dass ein einziges kontrastreiches Dunkelfeld-Bruchflächeneinzelbild 81 bzw. 82 erhalten wird.

Nach der Aufnahme der relevanten Dunkelfeld-Bruchflächeneinzelbilder 81, 82, 83, 84, 85 unter passenden Beleuchtungskonfigurationen und optionaler gewichteter arithmetischer Kombination von Einzel-Bildaufnahmeserien mit inkrementeller Winkelverstellung folgt eine Bildauswertung mit einer Auswerteeinrichtung 19. Dies Bildverarbeitungsverfahren ist hierbei beispielsweise wie folgt:
Diese Dunkelfeld-Bruchflächeneinzelbilder 81, 82, 83, 84 und 85 werden arithmetisch kombiniert, beispielsweise durch eine einfache Addition, woraus das in Fig. 10 gezeigte Bruchflächenbild 86 entsteht. Um das so entstandene Bruchflächenbild 86 zu binarisieren, wird es einem dynamischen Schwellwertverfahren zugeführt. Mit einem Mittelwertfilter wird aus dem analogen Bruchflächenbild 86 ein Mittelwertbruchflächenbild gebildet, welches dann mit dem analogen Bruchflächenbild 86 pixelweise verglichen wird. Abhängig von der Differenz wird der entsprechende Pixel des binarisierten Bruchflächenbilds auf 0 oder 1 gesetzt. Außerdem werden nicht zur Bruchfläche gehörende Randbereiche des Bruchflächenbilds, welche beispielsweise durch den Probenhalter entstehen, aus dem Bild entfernt. Dafür kann unter anderem auch die Breiteninformation, welche aus der mit dem ersten Kamerasystem aufgenommen Aufsicht der Probe gewonnen werden kann, herangezogen werden. Somit wird das in Fig. 11 gezeigte Bruchflächenbild 87 erzeugt. Mit weiteren bekannten Bildbearbeitungsverfahren, insbesondere einer Closing Operation, die einer Kombination von Dilatation und Erosion entspricht, wird die äußere Umrandung der Bruchfläche geschlossen sowie die Bruchfläche gefüllt, wie im Bruchflächenbild 90 gezeigt.

Solch ein behandeltes Bruchflächenbild 90 ist als abschließendes Ergebnis in Figur 12 dargestellt. Mit dem derart hergestellten Bruchflächenbild 90 kann in weiterer Folge eine Bestimmung von Größe der Bruchfläche 9 bzw. Bruchflächengröße Su, ein Dickenprofil, ein Breitenprofil und/oder ein Bruchflächenumriss bzw. eine Außenkontur K von der Auswerteeinrichtung 19 standfest und exakt vorgenommen werden, wie in Fig. 12 zu erkennen.

Bei der Erfindung ist von Vorteil, dass es in einfacher, robuster Weise möglich ist, auch automatisiert die Größe der Bruchfläche 9 einer Probe 8 zu bestimmen. Dies unter anderem, weil zunächst die Bruchfläche 9, beispielsweise mit der Bogenführung 15 und einem entsprechenden Laufwagen, zu einem ersten Kamerasystem 1 optimal positioniert wird, sodass anschließend über einer Dunkelfeldbeleuchtung eine exakte Bilderfassung der Bruchfläche 9 möglich wird, auf deren Grundlage bekanntermaßen über unterschiedliche Verfahren die Größe der Bruchfläche 9 bestimmt werden kann.

**Patentansprüche**

1. Verfahren zur Bestimmung der Bruchfläche (9) einer Probe (8), bei dem ein beweglicher Probenhalter (18) die Probe (8) hält,

   ein erstes Kamerasystem (1) mindestens ein Bruchwinkelbild (80) zu einem Bruchwinkel ($\alpha$) der Bruchfläche (9) der Probe (8) optisch erfasst,
   die Bruchfläche (9) der Probe (8) mithilfe des beweglichen Probenhalters (18) in Abhängigkeit des, vom ersten Kamerasystems (1) erfassten Bruchwinkelbilds (80) zu einer optischen Achse (4) eines zweiten Kamerasystems (2) ausgerichtet wird,
   mindestens eine erste Beleuchtungseinrichtung (5, 16) die Probe (8) beleuchtet, wobei die erste Beleuchtungseinrichtung (5, 16) zur Dunkelfeldbeleuchtung der Bruchfläche (9) vorgesehen ist,
   das zweite Kamerasystem (2) mindesten ein Bruchflächeneinzelbild (81, 82, 83, 84, 85) von der Bruchfläche (9) der Probe (8) unter Dunkelfeldbeleuchtung optisch erfasst und
   eine Auswerteeinrichtung (19) in Abhängigkeit wenigstens des, mindestens einen Dunkelfeld-Bruchflächeneinzelbilds (81, 82, 83, 84, 85) ein, insbesondere digitales, Bruchflächenbild (90) erzeugt und anhand dieses Bruchflächenbilds (90) die Bruchfläche (9), insbesondere dessen Bruchflächengröße (Su) und/oder dessen Außenkontur (K), bestimmt.

2. Verfahren nach Anspruch 1, **dadurch gekennzeichnet, dass** mehrere Dunkelfeld-Bruchflächeneinzelbilder unter unterschiedlichen Beleuchtungswinkeln ($\beta$) der mindestens einen ersten Beleuchtungseinrichtung (5, 16) zur Probe vom zweiten Kamerasystem (2) optisch erfasst werden und von der Auswerteeinrichtung (19) zu einem einzigen Dunkelfeld-Bruchflächeneinzelbild (81, 82) arithmetisch, insbesondere additiv, verknüpft werden.

3. Verfahren nach Anspruch 2, **dadurch gekennzeichnet, dass** die Dunkelfeld-Bruchflächeneinzelbilder in Abhängigkeit deren Beleuchtungswinkeln ($\beta$) gewichtet arithmetisch verknüpft werden.

4. Verfahren nach einem der Ansprüche 1 bis 3, **dadurch gekennzeichnet, dass** mindestens ein Bruchflächeneinzelbild unter Auflichtbeleuchtung optisch vom zweiten Kamerasystem (2) und/oder dass mindestens ein Bruchflächeneinzelbild (85) unter, insbesondere kollimierter, Hintergrundbeleuchtung optisch vom zweiten Kamerasystem (2) erfasst werden.

5. Verfahren nach einem der Ansprüche 4, **dadurch gekennzeichnet, dass** von der Auswerteeinrichtung (19) das, mindestens eine Dunkelfeld-Bruchflächeneinzelbild (81, 82, 83, 84) und das mindestens eine Hintergrund-Bruchflächeneinzelbild (85) und/oder das mindestens eine Auflicht-Bruchflächeneinzelbild arithmetisch zum Bruchflächenbild (90) verknüpft werden.

6. Verfahren nach einem der Ansprüche 5, **dadurch gekennzeichnet, dass** das Dunkelfeld-Bruchflächeneinzelbild (81, 82, 84, 85) und das mindestens eine Hintergrund-Bruchflächeneinzelbild (85) additiv und gegebenfalls das mindestens eine Hellfeld-Bruchflächeneinzelbild subtraktiv zum Bruchflächenbild (90) verknüpft werden.

7. Verfahren nach einem der Ansprüche 1 bis 6, **dadurch gekennzeichnet, dass** das Bruchflächenbild (90) einer Schwellwertoperation unterzogen wird.

8. Verfahren nach einem der Ansprüche 1 bis 7, **dadurch gekennzeichnet, dass** aus dem Bruchwinkelbild (80) der Bruchwinkel ($\alpha$) mithilfe einer Regressionsgeraden entlang der Bruchkante oder einem kleinsten umschreibenden Rechteck um die Bruchkante ermittelt wird.

9. Vorrichtung zur Durchführung des Verfahrens nach einem der Ansprüche 1 bis 8

   mit einem beweglichen Probenhalter (18) zum Halten einer Probe (8) mit einer Bruchfläche (9),
   mit einer Messeinrichtung (13), die wenigstens zwei, insbesondere senkrecht zueinanderstehende, Kamerasysteme (1, 2) mit optischen Achsen (3, 4) und die ein Messzentrum (13.1) aufweist, in welchem Messzentrum (13.1) sich die optischen Achsen (3, 4) dieser beiden Kamerasysteme (1, 2) kreuzen,
   mit mindestens einer ersten Beleuchtungseinrichtung (5, 16) zur Beleuchtung der Probe (8), und

mit einer Auswerteeinrichtung (19),
wobei das erste Kamerasystem (1) zur optischen Erfassung mindestens eines Bruchwinkelbilds (80) zu einem Bruchwinkel (α) der Bruchfläche (9) der Probe (8) und das zweite Kamerasystem (2) zur optischen Erfassung mindesten eines Bruchflächeneinzelbilds (81, 82, 83, 84, 85) von der Bruchfläche (9) der Probe (8) ausgebildet sind, wobei

der bewegliche Probenhalters (18) derart beweglich an der Vorrichtung gelagert ist, dass die Bruchfläche (9) der Probe (8) in Abhängigkeit des, vom ersten Kamerasystems (1) erfassten Bruchwinkelbilds (80) zu der optischen Achse (4) des zweiten Kamerasystems (2) ausgerichtet werden kann, wobei

die mindestens eine, erste Beleuchtungseinrichtung (5, 16) zur Dunkelfeldbeleuchtung der Bruchfläche (9) vorgesehen ist und wobei die Auswerteeinrichtung (19) ausgebildet ist, in Abhängigkeit wenigstens des mindestens einen Dunkelfeld-Bruchflächeneinzelbilds (81, 82, 83, 84) des zweiten Kamerasystems (2) ein Bruchflächenbild (90) zu erzeugen und anhand dieses Bruchflächenbilds (90) die Bruchfläche (9), insbesondere dessen Bruchflächengröße (Su) und/oder dessen Außenkontur (K), zu bestimmen.

10. Vorrichtung nach Anspruch 9, **dadurch gekennzeichnet, dass** die Vorrichtung eine Bogenführung (15) aufweist, über die der Probenhalter (18) an der Vorrichtung beweglich gelagert ist, insbesondere damit um das Messzentrum (13.1) herum, auf das Messzentrum (13.1) zu und/oder von diesem Messzentrum (13.1) wegbewegbar gelagert ist.

11. Vorrichtung nach einem der Ansprüche 9 bis 10, **dadurch gekennzeichnet, dass** mehrere erste Beleuchtungseinrichtungen (5, 16) zur Dunkelfeldbeleuchtung der Bruchfläche (9) vorgesehen sind, wobei die Beleuchtungseinrichtungen (5, 16) untereinander verschiedene Beleuchtungswinkel (β) aufweisen und die Vorrichtung ausgebildet ist, die ersten Beleuchtungseinrichtungen (5, 16) alternierend einzuschalten.

12. Vorrichtung nach Anspruch 11, **dadurch gekennzeichnet, dass** die Auswerteeinrichtung (19) ausgebildet ist, in Abhängigkeit mehrerer, insbesondere größer gleich vier, Dunkelfeld-Bruchflächeneinzelbilder, unter verschiedenen Beleuchtungswinkeln (β) ein einziges Bruchflächenbild (81, 82) zu erzeugen.

13. Vorrichtung nach Anspruch 11 oder 12, **dadurch gekennzeichnet, dass** die erste Beleuchtungseinrichtung (5, 16) ausgebildet ist, die rechte Schmalseitenfläche der Probe (8), die linke Schmalseitenfläche der Probe (8), die obere Breitseitenfläche der Probe (8) und/oder die untere Breitseitenfläche der Probe (8) zu beleuchten.

14. Vorrichtung nach einem der Ansprüche 9 bis 13, **dadurch gekennzeichnet, dass** eine erste Beleuchtungseinrichtung (5) um das Messzentrum (13.1) herum drehbar angeordnet ist.

15. Vorrichtung nach einem der Ansprüche 9 bis 14, **dadurch gekennzeichnet, dass** eine zweite Beleuchtungseinrichtung (6) zur Auflichtbeleuchtung der Bruchfläche (9) und/oder eine dritte Beleuchtungseinrichtung (60) zur Hintergrundbeleuchtung der Bruchfläche (9) vorgesehen sind.

16. Vorrichtung nach Anspruch 15, **dadurch gekennzeichnet, dass** die drehbar ausgebildete, erste Beleuchtungseinrichtung (5) in einer Drehstellung die zweite Beleuchtungseinrichtung (6) ausbildet.

17. Vorrichtung nach Anspruch 15 oder 16, **dadurch gekennzeichnet, dass** die Auswerteeinrichtung (19) ausgebildet ist Dunkelfeld-Bruchflächeneinzelbild (81, 82, 83, 84) des zweiten Kamerasystems (2) und das mindestens eine Hintergrund-Bruchflächeneinzelbild (85) des zweiten Kamerasystems (2) und gegebenfalls das mindestens eine Auflicht-Bruchflächeneinzelbild des zweiten Kamerasystems (2) zu einem Bruchflächenbild (90) arithmetisch zu verknüpfen.

18. Vorrichtung nach einem der Ansprüche 9 bis 17, **dadurch gekennzeichnet, dass** das zweite Kamerasystem (2) ein telezentrisches Objektiv aufweist.

**Claims**

1. Method for determining the fracture surface (9) of a specimen (8), in which a movable specimen holder (18) holds the specimen (8),

   a first camera system (1) optically records at least one fracture angle image (80) for a fracture angle (α) of the fracture surface (9) of the specimen (8),
   the fracture surface (9) of the specimen (8) is aligned with an optical axis (4) of a second camera system (2) with the aid of the movable specimen holder (18) as a function of the fracture angle image (80) detected by the first camera system (1),
   at least one first illumination device (5, 16) illuminates the specimen (8),
   wherein the first illumination device (5, 16) is provided for dark-field illumination of the fracture surface (9),

the second camera system (2) optically captures at least one fracture surface individual image (81, 82, 83, 84, 85) of the fracture surface (9) of the specimen (8) under dark-field illumination, and

an evaluation device (19) generates at least one, especially digital, fracture surface image (90) as a function of the at least one dark-field fracture surface individual image (81, 82, 83, 84, 85), and determines the fracture surface (9), more particularly its fracture surface size (Su) and/or its outer contour (K), on the basis of this fracture surface image (90).

2. Method according to claim 1, **characterized in that** a plurality of dark-field fracture surface individual images are optically recorded by the second camera system (2) at different illumination angles ($\beta$) of the at least one first illumination device (5, 16) relative to the specimen and are arithmetically combined, more particularly additively, by the evaluation device (19) to form a single dark-field fracture surface individual image (81, 82).

3. Method according to claim 2, **characterized in that** the dark-field fracture surface individual images are arithmetically combined in a weighted manner as a function of their illumination angles ($\beta$).

4. Method according to one of the claims 1 to 3, **characterized in that** at least one fracture surface individual image is optically captured under incident light illumination by the second camera system (2) and/or **in that** at least one fracture surface individual image (85) is optically captured under, more particularly collimated, background illumination by the second camera system (2).

5. Method according to one of claims 4, **characterized in that** the at least one dark-field fracture surface individual image (81, 82, 83, 84) and the at least one background fracture surface individual image (85) and/or the at least one incident-light fracture surface individual image are arithmetically combined by the evaluation device (19) into the fracture surface image (90).

6. Method according to one of claims 5, **characterized in that** the dark-field fracture surface individual image (81, 82, 84, 85) and the at least one background fracture surface individual image (85) are additively combined and, optionally, the at least one bright-field fracture surface individual image is subtractively combined to the fracture surface image (90).

7. Method according to one of claims 1 to 6, **charac-**

**terized in that** the fracture surface image (90) is subjected to a thresholding operation.

8. Method according to one of claims 1 to 7, **characterized in that** the fracture angle ($\alpha$) is determined from the fracture angle image (80) with the aid of a regression line along the fracture edge or a smallest circumscribing rectangle around the fracture edge.

9. Device for carrying out the method according to one of claims 1 to 8, having a movable specimen holder (18) for holding a specimen (8) with a fracture surface (9), having a measuring device (13) which comprises at least two, more particularly mutually perpendicular, camera systems (1, 2) with optical axes (3, 4) and which has a measuring center (13.1), in which measuring center (13.1) the optical axes (3, 4) of these two camera systems (1, 2) intersect,

having at least one first illumination device (5, 16) for illuminating the specimen (8), and having an evaluation device (19),

wherein the first camera system (1) is used for the optical acquisition of at least one fracture angle image (80) relating to a fracture angle ($\alpha$) of the fracture surface (9) of the specimen (8) and the second camera system (2) is used for the optical acquisition of at least one fracture surface individual image (81, 82, 83, 84, 85) of the fracture surface (9) of the specimen (8),

wherein the movable specimen holder (18) is mounted movably on the device in such a way that the fracture surface (9) of the specimen (8) can be aligned with the optical axis (4) of the second camera system (2) as a function of the fracture angle image (80) acquired by the first camera system (1),

wherein the at least one first illumination device (5, 16) is provided for dark-field illumination of the fracture surface (9), and wherein the evaluation device (19) is formed to generate a fracture surface image (90) as a function of at least one dark-field fracture surface individual image (81, 82, 83, 84) of the second camera system (2) and to determine the fracture surface (9), more particularly its fracture surface size (Su) and/or its outer contour (K), on the basis of this fracture surface image (90).

10. Device according to claim 9, **characterized in that** the device has a curved guide (15) by means of which the specimen holder (18) is movably mounted on the device, more particularly is mounted so as to be movable around the measuring center (13.1), towards the measuring center (13.1) and/or away from this measuring center (13.1).

11. Device according to one of claims 9 to 10, **charac-**

**terized in that** a plurality of first illumination devices (5, 16) are provided for dark-field illumination of the fracture surface (9), wherein the illumination devices (5, 16) have different illumination angles (β) with respect to one another, and the device is designed to switch on the first illumination devices (5, 16) alternately.

12. Device according to claim 11, **characterized in that** the evaluation device (19) is designed to generate a single fracture surface image (81, 82) as a function of a plurality of, more particularly greater than or equal to four, dark-field fracture surface individual images, under different illumination angles (β).

13. Device according to claim 11 or 12, **characterized in that** the first illumination device (5, 16) is designed to illuminate the right narrow side surface of the specimen (8), the left narrow side surface of the specimen (8), the upper broad side surface of the specimen (8) and/or the lower broad side surface of the specimen (8).

14. Device according to one of claims 9 to 13, **characterized in that** a first illumination device (5) is rotatably arranged around the measuring center (13.1).

15. Device according to one of claims 9 to 14, **characterized in that** a second illumination device (6) is provided for incident illumination of the fracture surface (9) and/or a third illumination device (60) is provided for background illumination of the fracture surface (9).

16. Device according to claim 15, **characterized in that** the rotatably designed first illumination device (5) forms the second illumination device (6) in a rotational position.

17. Device according to claim 15 or 16, **characterized in that** the evaluation device (19) is designed to arithmetically combine dark-field fracture surface individual image (81, 82, 83, 84) of the second camera system (2) and the at least one background fracture surface individual image (85) of the second camera system (2) and, optionally, the at least one incident light fracture surface individual image of the second camera system (2) to form a fracture surface image (90).

18. Device according to one of claims 9 to 17, **characterized in that** the second camera system (2) has a telecentric lens.

**Revendications**

1. Procédé pour déterminer la surface de rupture (9) d'un échantillon (8), dans lequel

un porte-échantillon mobile (18) maintient l'échantillon (8), un premier système de caméra (1) saisit optiquement au moins une image d'angle de rupture (80) concernant un angle de rupture (α) de la surface de rupture (9) de l'échantillon (8),

la surface de rupture (9) de l'échantillon (8) est orientée à l'aide du porte-échantillon mobile (18) en fonction de l'image d'angle de rupture (80) saisie par le premier système de caméra (1) par rapport à un axe optique (4) d'un deuxième système de caméra (2),

au moins un premier moyen d'éclairage (5, 16) éclaire l'échantillon (8), le premier moyen d'éclairage (5, 16) étant prévu pour l'éclairage sur fond noir de la surface de rupture (9),

le deuxième système de caméra (2) saisit optiquement au moins une image individuelle de surface de rupture (81, 82, 83, 84, 85) de la surface de rupture (9) de l'échantillon (8) sous éclairage sur fond noir et

un moyen d'évaluation (19) génère une image de surface de rupture (90), en particulier numérique, en fonction de ladite au moins une image individuelle de surface de rupture sur fond noir (81, 82, 83, 84, 85) et détermine, à l'aide de cette image de surface de rupture (90), la surface de rupture (9), en particulier sa taille de surface de rupture (Su) et/ou son contour extérieur (K).

2. Procédé selon la revendication 1, **caractérisé en ce que** plusieurs images individuelles de surface de rupture sur fond noir sous différents angles d'éclairage (β) dudit au moins un premier moyen d'éclairage (5, 16) pour l'échantillon sont saisies optiquement par le deuxième système de caméra (2) et sont combinées arithmétiquement, en particulier de manière additive, par le moyen d'évaluation (19) pour former une seule image individuelle de surface de rupture sur fond noir (81, 82).

3. Procédé selon la revendication 2, **caractérisé en ce que** les images individuelles de surface de rupture sur fond noir sont combinées arithmétiquement de manière pondérée en fonction de leurs angles d'éclairage (β).

4. Procédé selon l'une des revendications 1 à 3, **caractérisé en ce qu'**au moins une image individuelle de surface de rupture est saisie optiquement sous lumière incidente par le deuxième système de caméra (2) et/ou **en ce qu'**au moins une image individuelle de surface de rupture (85) est saisie optiquement sous éclairage arrière, en particulier collimaté, par le deuxième système de caméra (2).

**5.** Procédé selon l'une des revendications 4, **caractérisé en ce que** le moyen d'évaluation (19) combine arithmétiquement ladite au moins une image individuelle de surface de rupture sur fond noir (81, 82, 83, 84) et ladite au moins une image individuelle de surface de rupture sous éclairage arrière (85) et/ou ladite au moins une image individuelle de surface de rupture sous lumière incidente pour former l'image de surface de rupture (90).

**6.** Procédé selon l'une des revendications 5, **caractérisé en ce que** l'image individuelle de surface de rupture sur fond noir (81, 82, 84, 85) et ladite au moins une image individuelle de surface de rupture sous éclairage arrière (85) sont combinées de manière additive et, le cas échéant, ladite au moins une image individuelle de surface de rupture sur fond clair de manière soustractive pour former l'image de surface de rupture (90).

**7.** Procédé selon l'une des revendications 1 à 6, **caractérisé en ce que** l'image de surface de rupture (90) est soumise à une opération de valeur seuil.

**8.** Procédé selon l'une des revendications 1 à 7, **caractérisé en ce que** l'angle de rupture ($\alpha$) est déterminé à partir de l'image d'angle de rupture (80) à l'aide d'une droite de régression le long du bord de rupture ou d'un plus petit rectangle circonscrit autour du bord de rupture.

**9.** Dispositif pour mettre en œuvre le procédé selon l'une des revendications 1 à 8,

avec un porte-échantillon mobile (18) pour maintenir un échantillon (8) avec une surface de rupture (9),
avec un moyen de mesure (13) qui présente au moins deux systèmes de caméra (1, 2), en particulier perpendiculaires l'un à l'autre, avec des axes optiques (3, 4) et qui présente un centre de mesure (13.1), au niveau duquel centre de mesure (13.1) les axes optiques (3, 4) de ces deux systèmes de caméra (1, 2) se croisent,
avec au moins un premier moyen d'éclairage (5, 16) pour éclairer l'échantillon (8), et
avec un moyen d'évaluation (19),
le premier système de caméra (1) étant conçu pour saisir optiquement au moins une image d'angle de rupture (80) concernant un angle de rupture ($\alpha$) de la surface de rupture (9) de l'échantillon (8) et le deuxième système de caméra (2) pour saisir optiquement au moins une image individuelle de surface de rupture (81, 82, 83, 84, 85) de la surface de rupture (9) de l'échantillon (8),
le porte-échantillon mobile (18) étant monté de manière mobile sur le dispositif de telle sorte que la surface de rupture (9) de l'échantillon (8) peut être orientée par rapport à l'axe optique (4) du deuxième système de caméra (2) en fonction de l'image d'angle de rupture (80) saisie par le premier système de caméra (1),
ledit au moins un premier moyen d'éclairage (5, 16) étant prévu pour l'éclairage sur fond noir de la surface de rupture (9) et le moyen d'évaluation (19) étant conçu pour générer une image de surface de rupture (90) en fonction d'au moins une image individuelle de surface de rupture sur fond noir (81, 82, 83, 84) du deuxième système de caméra (2) et pour déterminer, à l'aide de cette image de surface de rupture (90), la surface de rupture (9), en particulier sa taille de surface de rupture ($S_u$) et/ou son contour extérieur (K).

**10.** Dispositif selon la revendication 9, **caractérisé en ce que** le dispositif présente un guidage curviligne (15) au moyen duquel le porte-échantillon (18) est monté mobile sur le dispositif, en particulier à pouvoir être déplacé avec celui-ci autour du centre de mesure (13.1), vers le centre de mesure (13.1) et/ou à l'écart de ce centre de mesure (13.1).

**11.** Dispositif selon l'une des revendications 9 à 10, **caractérisé en ce que** plusieurs premiers moyens d'éclairage (5, 16) sont prévus pour éclairer la surface de rupture (9) sur fond noir, les moyens d'éclairage (5, 16) présentant entre eux des angles d'éclairage ($\beta$) différents et le dispositif étant conçu pour allumer alternativement les premiers moyens d'éclairage (5, 16).

**12.** Dispositif selon la revendication 11, **caractérisé en ce que** le moyen d'évaluation (19) est conçu pour générer une seule image de surface de rupture (81, 82) en fonction de plusieurs, en particulier d'au moins quatre images individuelles de surface de rupture sur fond noir, sous différents angles d'éclairage ($\beta$).

**13.** Dispositif selon la revendication 11 ou 12, **caractérisé en ce que** le premier moyen d'éclairage (5, 16) est conçu pour éclairer la surface du petit côté droit de l'échantillon (8), la surface du petit côté gauche de l'échantillon (8), la surface du grand côté supérieur de l'échantillon (8) et/ou la surface du grand côté inférieur de l'échantillon (8).

**14.** Dispositif selon l'une des revendications 9 à 13, **caractérisé en ce qu'**un premier moyen d'éclairage (5) est disposé de manière rotative autour du centre de mesure (13.1).

**15.** Dispositif selon l'une des revendications 9 à 14, **caractérisé en ce qu'**il est prévu un deuxième moyen d'éclairage (6) pour éclairer en lumière incidente la surface de rupture (9) et/ou un troisième moyen d'éclairage (60) pour éclairer par l'arrière la surface de rupture (9).

16. Dispositif selon la revendication 15, **caractérisé en ce que** le premier moyen d'éclairage (5) conçu de manière rotative forme le deuxième moyen d'éclairage (6) dans une position de rotation.

17. Dispositif selon la revendication 15 ou 16, **caractérisé en ce que** le moyen d'évaluation (19) est conçu pour combiner arithmétiquement l'image individuelle de surface de rupture sur fond noir (81, 82, 83, 84) du deuxième système de caméra (2) et ladite au moins une image individuelle de surface de rupture sous éclairage arrière (85) du deuxième système de caméra (2) et, le cas échéant, ladite au moins une image individuelle de surface de rupture sous lumière incidente du deuxième système de caméra (2) pour former une image de surface de rupture (90).

18. Dispositif selon l'une des revendications 9 à 17, **caractérisé en ce que** le deuxième système de caméra (2) présente un objectif télécentrique.

## FIG.1a

## FIG.1b

FIG.2

EP 3 904 867 B1

## FIG.3

EP 3 904 867 B1

# FIG.4

FIG.5

*81*

FIG.6

*82*

FIG.7

*83*

## FIG.8

84

## FIG.9

85

## FIG.10

86

## FIG.11

87

## FIG.12

90

K

$S_u$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015055795 A1
- DE 4033588 A1

- DE 102018217225 A1